# EUROPÄISCHE PATENTANMELDUNG

(11) **EP 4 737 849 A2**
(43) Veröffentlichungstag der Anmeldung: **06.05.2026**
(21) Anmeldenummer: 25207286.3
(22) Anmeldetag: 07.10.2025
(51) Int. Cl.: G01C 11/02, G01C 15/06, G06V 20/13

(54) **BODENSTATIONSSYSTEM UND VERFAHREN FÜR EINE GEOREFERENZIERUNG VON LUFTBILDERN UND SMARTE BAUSTELLENBLINKLEUCHTE MIT EINER PASSPUNKT-EINHEIT FÜR DIE GEOREFERENZIERUNG**

(30) Priorität: 08.10.2024 DE 102024128987
(71) Anmelder: CM1 GmbH, 91207 Lauf an der Pegnitz (DE)
(72) Erfinder: Böhm, Maria Susanne Iris, 90562 Heroldsberg (DE)
(74) Vertreter: Daub, Thomas

(57) **Zusammenfassung**

Die Erfindung geht aus von einem Bodenstationssystem (38a-c) zu einer Georeferenzierung von Luftbildern, insbesondere für eine Kalibrierung und/oder Einmessung von Drohnen-Photogrammetriedaten, eines Areals (10a-c), wie beispielsweise u.a. einer Baustelle, einer archäologischen Fund- und/oder Ausgrabungsstätte oder einer Infrastrukturanlage, mit einer Mehrzahl an über das Areal (10a-c) verteilt anordenbaren Passpunkt-Einheiten (12a-c, 14a-c, 16a-c), wobei jede der Passpunkt-Einheiten (12a-c, 14a-c, 16a-c) auf wenigstens einer Oberfläche eine eindeutig aus der Luft identifizierbare optische Markierung (18a-c) aufweist.

Es wird vorgeschlagen, dass jeder der Passpunkt-Einheiten (12a-c, 14a-c, 16a-c) ein Globales-Navigationssatellitensystem (GNSS)-Modul (20) zu einer Erfassung seiner momentanen geographischen Position und ein Weitverkehrsfunknetz (WWAN)-Modul (28a-c) zumindest zu einem drahtlosen Übermitteln der erfassten momentanen geographischen Position zugeordnet ist, wobei zumindest eine der Passpunkt-Einheiten (12a-c, 14a-c, 16a-c) in ein zumindest temporär dem Areal (10a-c) zugeordnetes und eine von der Georeferenzierung verschiedene Hauptfunktion innerhalb des Areals (10a-c) ausführendes Funktionsobjekt (22a-c, 24a-c, 26a-c) integriert ist.

## Beschreibung

### Stand der Technik

Die Erfindung betrifft ein Bodenstationssystem nach dem Oberbegriff des Anspruchs 1, eine smarte Baustellenblinkleuchte nach dem Oberbegriff des Anspruchs 9 und ein Verfahren nach dem Oberbegriff des Anspruchs 15.

Es sind bereits Bodenstationssysteme zu einer Georeferenzierung von Luftbildern für eine Kalibrierung von Drohnen-Photogrammetriedaten von Arealen mit einer Mehrzahl an über das Areal verteilt anordenbaren Passpunkten, wobei jeder der Passpunkte auf wenigstens einer Oberfläche eine eindeutig aus der Luft identifizierbare optische Markierung aufweist, vorgeschlagen worden. Die Passpunkte der bekannten Systeme sind flache gemusterte Platten, welche in Arealen mit viel Aktivität, wie z.B. Erdbewegungen an Baustellen, leicht verdeckt, verschoben oder verkippt werden können. Die Passpunkte können dadurch unauffindbar werden und/oder ihre präzise Zuordnung zu Einmess-Koordinaten verlieren.

Die Aufgabe der Erfindung besteht insbesondere darin, eine gattungsgemäße Vorrichtung mit vorteilhaften Eigenschaften hinsichtlich einer Zuverlässigkeit und/oder einer Nutzerfreundlichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Bodenstationssystem zu einer Georeferenzierung von Luftbildern, insbesondere für eine Kalibrierung und/oder Einmessung von Drohnen-Photogrammetriedaten, eines Areals, wie beispielsweise u.a. einer Baustelle, einer archäologischen Fund- und/oder Ausgrabungsstätte oder einer Infrastrukturanlage, mit einer Mehrzahl an über das Areal verteilt anordenbaren Passpunkt-Einheiten, wobei jede der Passpunkt-Einheiten auf wenigstens einer Oberfläche eine eindeutig aus der Luft identifizierbare optische Markierung aufweist.

Es wird vorgeschlagen, dass jeder der Passpunkt-Einheiten ein Globales-Navigationssatellitensystem (GNSS)-Modul zu einer Erfassung seiner momentanen geographischen Position und ein Weitverkehrsfunknetz (WWAN)-Modul zumindest zu einem drahtlosen Übermitteln der erfassten momentanen geographischen Position zugeordnet ist, wobei zumindest eine der Passpunkt-Einheiten in ein zumindest temporär dem Areal zugeordnetes und eine von der Georeferenzierung verschiedene Hauptfunktion innerhalb des Areals ausführendes, vorzugsweise mechanisches und/oder elektronisches, Funktionsobjekt integriert ist. Dadurch kann vorteilhaft eine hohe Nutzerfreundlichkeit erreicht werden, insbesondere indem eine initiale Positionierung erleichtert und/oder eine spätere Auffindbarkeit der Passpunkt-Einheiten verbessert werden kann. Vorteilhaft kann eine hohe Stabilität der Positionierung und/oder eine hohe Positionstreue ausgebrachter Passpunkt-Einheiten erreicht werden. Des Weiteren kann vorteilhaft eine hohe Positioniergenauigkeit auch nach (versehentlichen) Verschiebungen erreicht werden. Vorteilhaft kann eine zuverlässige Zuordnung zu geographischen Koordinaten über einen langen Zeitraum erreicht werden. Vorteilhaft kann ein besonders einfaches und nutzerfreundliches Einmessen, insbesondere mittels des integrierten GNSS-Moduls, und/oder ein besonders einfaches und/oder nutzerfreundliches (Fern-)Auslesen von Daten wie den aktuellen Positionsdaten, erreicht werden. Insbesondere kann vorteilhaft auf ein händisches Einmessen von Passpunkten verzichtet werden. Außerdem kann vorteilhaft eine gute Sichtbarkeit vom Boden aus, insbesondere für Personen, die sich in dem Areal aufhalten oder auf dem Areal bewegen, wie z.B. Bauarbeiter, erreicht werden. Dadurch kommt es vorteilhaft zu weniger unbeabsichtigten Manipulationen oder Bedeckungen der Passpunkte.

Der Begriff Georeferenzierung bezeichnet insbesondere einen Prozess, bei welchem geografische Daten aus Luft- oder Satellitenbildern mit realen Koordinaten eines geografischen Bezugssystems (z.B. dem WGS84-Koordinatensystem) verknüpft werden. Das Ziel der Georeferenzierung ist dabei insbesondere räumliche, z.B. photographische, Informationen so zu verarbeiten, dass sie in einem geographischen Koordinatensystem (z.B. in Längen-, Breitengrade und ggf. Altituden) korrekt dargestellt und vorzugsweise mit anderen räumlichen Daten übereingebracht werden können. Luftbilder können von bemannten oder unbemannten Luftfahrzeugen aufgenommen werden. Bevorzugt werden die Luftbilder heutzutage mittels einer Drohne oder mittels eines Drohnenschwarms aufgezeichnet. Die Drohnen-Photogrammetrie ist ein Verfahren, bei dem beispielsweise Luftaufnahmen, die von Drohnen gemacht werden, verwendet werden, um vorzugsweise dreidimensionale Modelle und/oder präzise Karten von Arealen, z.B. mit Landschaften, Objekten oder Bauwerken, zu erstellen. Die Drohne/n erfasst/erfassen dabei insbesondere eine Serie von überlappenden Bildern aus verschiedenen Blickwinkeln, die vorzugsweise mithilfe spezieller Software analysiert werden, um aus den zweidimensionalen Luftaufnahmen dreidimensionale Strukturen zu rekonstruieren. Die Drohnenbilder umfassen insbesondere auch ein oder mehrere Passpunkt-Einheiten, welche identifiziert und exakten geographischen Koordinaten zugeordnet werden können. Durch die Kombination der Kamerainformationen mit den geographischen Koordinaten der Passpunkt-Einheiten können Höhenprofile, 3D-Modelle und/oder georeferenzierte Karten mit hoher Genauigkeit erstellt werden. Drohnen-Photogrammetrie findet beispielsweise Anwendung in Bereichen wie Bauwesen, Landwirtschaft, Vermessung, Verkehr, Archäologie und Umweltschutz. Die Passpunkt-Einheiten des Bodenstationssystems bilden zumindest einen Teil der Bodenstationen des Bodenstationssystems aus. Die optische Markierung der Passpunkt-Einheiten sind jeweils Muster (farbig oder schwarz-weiß). Es ist denkbar, dass mehrere oder alle Passpunkt-Einheiten des Bodenstationssystems innerhalb eines Areals identische optische Markierungen aufweisen. Es ist jedoch alternativ oder zusätzlich auch denkbar, dass mehrere oder alle Passpunkt-Einheiten des Bodenstationssystems innerhalb eines Areals unterschiedliche optische Markierungen aufweisen. Dadurch können sie in den Luftbildern vorteilhaft einfacher unterschieden werden. Es ist denkbar, dass die Passpunkt-Einheiten auf einer einzigen Oberflächenseite oder auf mehr als einer Oberflächenseite eine eindeutig aus der Luft identifizierbare optische Markierung aufweisen.

Ein Globales-Navigationssatellitensystem (GNSS)-Modul ist insbesondere eine elektronische Komponente der Passpunkt-Einheit, welche dazu vorgesehen ist, Satellitensignale von globalen Navigationssatellitensystemen zu empfangen und vorzugsweise zu verarbeiten, um präzise Positionen zu bestimmen. Der Begriff GNSS soll mehrere Satellitensysteme wie das amerikanische GPS (Global Positioning System), das russische GLONASS, das europäische Galileo und das chinesische BeiDou umfassen. Ein Weitverkehrsfunknetz (WWAN)-Modul ist insbesondere eine elektronische Komponente der Passpunk-Einheit, welche dazu vorgesehen ist, drahtlose Verbindungen über große Entfernungen zu ermöglichen, beispielsweise indem es etablierte Mobilfunkstandards und/oder -netze wie 3G, 4G, LTE oder 5G nutzt. Insbesondere ist das WWAN-Modul dazu vorgesehen, die momentane geographische Position der zugehörigen Passpunkt-Einheit über weite Strecken (Kilometer und mehr) zu übertragen. Vorzugsweise ist das WWAN-Modul dazu vorgesehen, eine ständig abrufbare drahtlose Verbindung bereitzustellen. Über das WWAN-Modul ist die Passpunkt-Einheit vorteilhaft fernauslesbar und insbesondere auch in Gebieten funktionsfähig, in denen kein WLAN verfügbar ist. Zudem ist vorteilhaft auch keine Herstellung einer lokalen Nahverkehrsnetz-Netzwerkverbindung mit der Passpunkt-Einheit, wie z.B. Bluetooth o.dgl., für ein Auslesen erforderlich. Es ist alternativ auch denkbar, dass zusätzlich zu dem WWAN-Modul ein weiteres Funkmodul für ein kurzreichweitiges Netzwerkprotokoll wie Bluetooth, WLAN, etc. in der Passpunkt-Einheit integriert ist. Außerdem ist denkbar, dass über das WWAN-Modul noch andere Daten neben der momentanen geographischen Position übermittelbar sind, z.B. Statusmeldungen, Ladungsstände, Ereignismeldungen über Ereignisse wie Erschütterungen oder Repositionierungen, u.v.m. Unter "vorgesehen" und/oder unter "eingerichtet" soll insbesondere speziell programmiert, ausgelegt und/oder ausgestattet verstanden werden. Darunter, dass ein Objekt zu einer bestimmten Funktion vorgesehen und/oder eingerichtet ist, soll insbesondere verstanden werden, dass das Objekt diese bestimmte Funktion in zumindest einem Anwendungs- und/oder Betriebszustand erfüllt und/oder ausführt.

Insbesondere durch die Integration der Passpunkt-Einheiten mit anderen Funktionsobjekten kann die Auffindbarkeit erleichtert werden (andere Größe, Dimension, Beleuchtung, Farbe, etc.) und/oder die Ausbringung erleichtert werden (erfolgt gemeinsam mit dem Ausbringen der Funktionsobjekte). Zudem kann vorteilhaft eine Positionierstabilität verbessert werden (höheres Gewicht, bessere Standsituation, größere Rücksichtnahme und Aufmerksamkeit durch Dritte, etc.). Das Funktionsobjekt besitzt vorzugsweise eine Hauptfunktion, die verschieden von einer Vermessung, von einer Photogrammetrie und/oder von einer Positionsmarkierung ist. Außerdem ist die Hauptfunktion des Funktionsobjekts vorzugsweise verschieden von einer reinen räumlichen Begrenzung, oder einem Bereitstellen einer Trittfläche. Bevorzugt ist das Funktionsobjekt eine Maschine oder ein elektronisches Gerät, beispielsweise eine Baumaschine oder ein Baugerät / Baustellengerät. Insbesondere ist das Funktionsobjekt kein passives Funktionsobjekt, wie z.B. eine Platte oder ein Pfosten. Insbesondere ist das Funktionsobjekt ein aktives Funktionsobjekt. Insbesondere ist das aktive Funktionsobjekt zu einer aktiven Ausführung einer, vorzugsweise aktivierbaren und deaktivierbaren Funktion, z.B. eines Beleuchtens oder eines Warnens oder eines Bewegens von Objekten, vorgesehen.

Wenn zumindest eines der Funktionsobjekte, in das eine der Passpunkt-Einheiten integriert ist, ein dem Areal zugeordnetes Fahrzeug, beispielsweise u.a. ein Baufahrzeug, ein Einsatzfahrzeug oder ein Personentransportfahrzeug, ist, kann vorteilhaft eine hohe Zuverlässigkeit und/oder eine hohe Nutzerfreundlichkeit erreicht werden. Vorteilhaft kann eine einfache Positionierung der Passpunkt-Einheit erreicht werden. Vorteilhaft kann ein einfaches Auffinden der Passpunkt-Einheit erreicht werden. Zudem kann vorteilhaft ein einfacher Zugriff auf Komponenten des Fahrzeugs, z.B. einer Stromversorgungs-Komponente des Fahrzeugs zur Versorgung einer Elektronik der Passpunkt-Einheit oder zur Aufladung einer Batterie der Passpunkt-Einheit und/oder einer Standortbestimmungs-Komponente des Fahrzeugs, z.B. zur Schaffung einer Redundanz, ermöglicht sein. Das Fahrzeug kann u.a. ein Bagger, ein Radlader, eine Planierraupe, ein Kipper, eine Walze, ein Betonmischer-LKW, ein Stapler, ein Pritschenwagen, ein Bus oder ein Kleintransporter sein.

Wenn alternativ oder zusätzlich zumindest eines der Funktionsobjekte, in das eine der Passpunkt-Einheiten integriert ist, ein in dem Areal zumindest temporär stationär installiertes Funktionsobjekt, beispielsweise u.a. eine Warnleuchte, ein Wohn- und/oder Aufenthaltscontainer, ein Toilettenhäuschen, eine Absperrung, ein Stromgenerator, ein Müllcontainer, ein Wassercontainer oder ein Kran, ist, kann vorteilhaft eine hohe Zuverlässigkeit und/oder eine hohe Nutzerfreundlichkeit erreicht werden. Vorteilhaft kann eine einfache Positionierung der Passpunkt-Einheit erreicht werden. Vorteilhaft kann ein einfaches Auffinden der Passpunkt-Einheit erreicht werden.

Im Speziellen wird vorgeschlagen, dass das temporär stationär installierte Funktionsobjekt mit der integrierten Passpunkt-Einheit eine smarte Baustellenblinkleuchte oder eine smarte Bakenwarnleuchte ist, wobei das der Passpunkt-Einheit zugeordnete GNSS-Modul und/oder das der Passpunkteinheit zugeordnete WWAN-Modul ein integraler Bestandteil einer Leuchteinheit der smarten Baustellenblinkleuchte oder der smarten Bakenwarnleuchte ist. Dadurch kann vorteilhaft eine hohe Zuverlässigkeit und/oder eine hohe Nutzerfreundlichkeit erreicht werden. Vorteilhaft kann eine einfache Positionierung der Passpunkt-Einheit erreicht werden. Vorteilhaft kann ein einfaches Auffinden der Passpunkt-Einheit erreicht werden. Insbesondere kann mittels Leuchtsignalen der in dem Areal verorteten smarten Baustellenblinkleuchten oder der smarten Bakenwarnleuchten ein schnelles und einfaches Auffinden / Wiederauffinden aller über das Areal verstreuten Passpunkt-Einheiten ermöglicht werden, insbesondere auch bei Nacht oder bei eingeschränkten Sichtverhältnissen. Vorteilhaft kann eine Kostengünstigkeit und/oder eine hohe Nachhaltigkeit erreicht werden.

Baustellenblinkleuchten und/oder Bakenwarnleuchten werden insbesondere zu einer Absicherung und Warnung von Gefahrenbereichen eingesetzt. Die smarte Baustellenblinkleuchte und/oder Bakenwarnleuchte umfasst eine oder mehrere smarte Funktionen, welche über deren traditionelle / gewöhnliche Leucht- und/oder Blinkfunktion hinausgehen. Eine smarte Funktion kann beispielsweise ein automatisiertes Anschalten, Abschalten und/oder Steuern durch Sensoren oder durch eine Fernsteuerung sein. Eine smarte Funktion kann beispielsweise eine Konnektivität, z.B. über mobile Netzwerke sein (Stickwort loT). Eine smarte Funktion kann beispielsweise eine Zustandsüberwachung, welche Ausfälle oder dergleichen anzeigt, oder eine Predictive-Maintenance-Funktion, welche Vorhersagen trifft, wann eine Wartung, Erneuerung oder dergleichen erforderlich sein wird, sein. Eine smarte Funktion kann beispielsweise eine Lokalisationsfunktion (z.B. über GNSS) sein, so dass Standorte der smarten Baustellenblinkleuchte und/oder der smarten Bakenwarnleuchte immer aktuell auf einer Karte oder dergleichen dargestellt werden können. Eine smarte Funktion kann beispielsweise eine Ereigniserkennung, z.B. eine Erkennung einer Bewegung / Repositionierung (z.B. über GNSS und/oder über Beschleunigungssensoren) sein, so dass Änderungen immer registriert werden und z.B. aktuell auf einer Karte oder dergleichen dargestellt werden können. Die Passpunkt-Einheit besitzt vorzugsweise Zugriff auf das GNSS-Modul der smarten Baustellenblinkleuchte und/oder der smarten Bakenwarnleuchte. Die Passpunkt-Einheit teilt sich vorzugsweise das GNSS-Modul mit der smarten Baustellenblinkleuchte und/oder der smarten Bakenwarnleuchte. Die Passpunkt-Einheit besitzt vorzugsweise Zugriff auf das WWAN-Modul der smarten Baustellenblinkleuchte und/oder der smarten Bakenwarnleuchte. Die Passpunkt-Einheit teilt sich vorzugsweise das WWAN-Modul mit der smarten Baustellenblinkleuchte und/oder der smarten Bakenwarnleuchte. Die Leuchteinheit der smarten Baustellenblinkleuchte und/oder der smarten Bakenwarnleuchte ist insbesondere der Teil der smarten Baustellenblinkleuchte und/oder der smarten Bakenwarnleuchte, welcher die Blinksignale und/oder die Leuchtsignale der smarten Baustellenblinkleuchte und/oder der smarten Bakenwarnleuchte, erzeugt und ausgibt, sowie regelt und/oder steuert. Die Leuchteinheit umfasst vorzugsweise die dafür erforderliche Elektronik. Es ist denkbar, dass das GNSS-Modul und/oder das WWAN-Modul auf einer gemeinsamen Leiterplatte angeordnet ist wie eine die Leuchteinheit steuernde und/oder regelnde Elektronik oder dass eine oder mehrere Leiterplatten von dem GNSS-Modul und/oder dem WWAN-Modul mit Leiterplatten der Leuchteinheit (fest) verbunden sind. Es ist denkbar, dass das GNSS-Modul und/oder das WWAN-Modul auf denselben Energiespeicher der smarten Baustellenblinkleuchte und/oder der smarten Bakenwarnleuchte zugreifen wie die Leuchteinheit der smarten Baustellenblinkleuchte und/oder der smarten Bakenwarnleuchte, insbesondere das / die Leuchtmittel der smarten Baustellenblinkleuchte und/oder der smarten Bakenwarnleuchte und/oder eine Steuer- und/oder Regeleinheit der smarten Baustellenblinkleuchte und/oder der smarten Bakenwarnleuchte zur Steuerung zumindest der Leuchtmittel.

Ferner wird vorgeschlagen, dass das temporär stationär installierte Funktionsobjekt mit der integrierten Passpunkt-Einheit eine smarte Baustellenblinkleuchte oder eine smarte Bakenwarnleuchte ist, welche dazu eingerichtet ist, mittels eines Leuchtsignals, z.B. durch ein Blinken, einen aktiven Georeferenzierungs-Vorgang anzuzeigen. Dadurch kann vorteilhaft der Georeferenzierungs-Vorgang, insbesondere ein Drohnen-Photogrammetrie-Vorgang, optimiert und weniger fehleranfällig gemacht werden. Vorteilhaft kann sichergestellt werden, dass während des Georeferenzierungs-Vorgangs, insbesondere des Drohnen-Photogrammetrie-Vorgangs, keine Passpunkte verschoben, berührt oder anderweitig manipuliert werden. Insbesondere kann ein übliches (normiertes) Blinkprogramm der Baustellenblinkleuchten / Bakenwarnleuchten dafür verwendet werden. Alternativ ist jedoch auch denkbar, dass die Baustellenblinkleuchten / Bakenwarnleuchten spezielle Leuchtsignale aussenden, wenn der Georeferenzierungs-Vorgang läuft. Beispielsweise könnte ein tagsüber / bei Helligkeit aktiviertes Blinken der smarten Baustellenblinkleuchte oder der smarten Bakenwarnleuchte den Georeferenzierungs-Vorgang anzeigen. Für Personen auf dem Boden würde dieses Blinken anzeigen, dass ein Verschieben der Passpunkte aktuell nicht gestattet ist oder zumindest vermieden werden sollte.

Zudem wird vorgeschlagen, dass das Bodenstationssystem eine dem Areal zugeordnete, und insbesondere in dem Areal angeordnete, RTK-GNSS (Real-Time Kinematic Global Navigation Satellite System)-Basisstation aufweist, welche dazu eingerichtet ist, Korrekturdaten für die Positionsbestimmung der GNSS-Module der Passpunkt-Einheiten zu bestimmen und an die GNSS-Module, insbesondere an die WWAN-Module der Passpunkt-Einheiten zur Weitergabe an die GNSS-Module, zu übermitteln. Dadurch kann eine besonders hohe Genauigkeit erreicht werden. Vorteilhaft kann die hohe Genauigkeit innerhalb sehr kurzer Zeit erreicht werden, so dass eine Repositionierung einer Passpunkt-Einheit auch während des Georeferenzierungs-Vorgangs sinnvoll möglich bleibt, insbesondere vorausgesetzt die Positionsdaten der Passpunkt-Einheiten werden zeitlich mit den Aufnahmezeitpunkten der jeweiligen Luftbilder abgeglichen. Vorteilhaft kann eine Integration der Passpunkt-Einheiten in die Fahrzeuge, welche nicht zwingend einen vollständigen Stillstand aller Aktivitäten der Fahrzeuge in dem Areal während des Georeferenzierungs-Vorgangs benötigt, ermöglicht werden. Eine RTK-GNSS-Basisstation ist insbesondere eine (meist zumindest temporär fest installierte) Referenzstation, die präzise Korrekturdaten (z.B. von Satellitenfehlern oder atmosphärischen Störungen) für GNSS-Signale in Echtzeit, insbesondere an die GNSS-Module der Passpunkt-Einheiten bereitstellt. Diese Korrekturdaten ermöglichen es vorteilhaft die Position der (ggf. beweglichen) Passpunkt-Einheiten mit den GNSS-Modulen (GNSS-Empfängern) mit extrem hoher Genauigkeit zu bestimmen, oft im Bereich von wenigen Zentimetern bis Millimetern. Die RTK-GNSS-Basisstation weist vorzugsweise ein WWAN-Modul zu einer Kommunikation mit den WWAN-Modulen der einzelnen Passpunkt-Einheiten auf. Es ist denkbar, dass dem Areal mehrere RTK-GNSS-Basisstationen zugeordnet sind.

Zusätzlich wird vorgeschlagen, dass wenigstens die zumindest eine Passpunkt-Einheit, vorzugsweise jede der Passpunkt-Einheiten, ein Beschleunigungssensor-Modul zu einer Erkennung von Bewegungen der jeweiligen Passpunkt-Einheit umfasst. Dadurch kann vorteilhaft eine hohe Genauigkeit erreicht werden. Vorteilhaft kann eine Repositionierung sofort erkannt und eine Neueinmessung der geänderten Position mittels des GNSS-Moduls sofort erfolgen. Vorteilhaft kann Energie eingespart werden, z.B. indem das GNSS-Modul lediglich dann aktiv wird, wenn eine Repositionierung festgestellt wurde und die Position nicht einfach dauerhaft oder regelmäßig wiederholt durchgeführt werden muss.

Wenn also das GNSS-Modul dazu eingerichtet ist, in Folge einer von dem Beschleunigungssensor-Modul detektierten Bewegung der jeweiligen Passpunkt-Einheit eine automatische Neu-Einmessung der geographischen Position der zugehörigen Passpunkt-Einheit vorzunehmen, welche dann vorzugsweise von dem WWAN-Modul drahtlos ausgegeben wird, kann vorteilhaft eine hohe Zuverlässigkeit, Genauigkeit und/oder Energieeffizienz erreicht werden. Vorzugsweise misst sich die Passpunkt-Einheit mittels des GNSS-Moduls nach jedem Einschalten der Leuchteinheit und/oder der Passpunkteinheit und/oder nach jedem detektierten Re-Positionieren der Passpunkt-Einheit neu ein. Vorzugsweise schickt die Passpunkt-Einheit mittels des WWAN-Moduls nach jeder Messung / Koordinatenmessung die gemessenen geographischen Koordinaten an einen Empfänger, z.B. an ein Photogrammetrie-System oder an ein gemeinsames (zumindest zu der Passpunkt-Einheit) externes Backend für mehrere / alle Passpunkt-Einheiten des Areals. Ein Anwender kann dann vorzugsweise die Daten von dem externen Backend beziehen und in sein spezifisches Koordinatensystem herunterladen / in seinem spezifischen Koordinatensystem verwenden.

Ferner wird die smarte Baustellenblinkleuchte oder die smarte Bakenwarnleuchte, insbesondere für das Bodenstationssystem, vorgeschlagen, mit einer Leuchteinheit zu einer Ausgabe von Lichtsignalen/Leuchtsignalen, insbesondere Warnlichtsignalen/Warnleuchtsignalen, mit dem integrierten GNSS-Modul zu der Erfassung der momentanen geographischen Position und mit dem, insbesondere in die Leuchteinheit, integrierten WWAN-Modul zumindest zu dem drahtlosen Übermitteln der erfassten momentanen geographischen Position, wobei die smarte Baustellenblinkleuchte oder die smarte Bakenwarnleuchte zudem die integrierte Passpunkt-Einheit für die Georeferenzierung von Luftbildern, insbesondere für die Kalibrierung und/oder Einmessung von Drohnen-Photogrammetriedaten, aufweist, und wobei die Passpunkt-Einheit wenigstens die Oberfläche mit der eindeutig aus der Luft identifizierbaren optischen Markierung aufweist. Dadurch kann vorteilhaft eine hohe Nutzerfreundlichkeit erreicht werden, insbesondere indem eine initiale Positionierung erleichtert und/oder eine spätere Auffindbarkeit des Passpunkt-Einheiten verbessert werden kann. Vorteilhaft kann eine hohe Stabilität der Positionierung und/oder eine hohe Positionstreue ausgebrachter Passpunkt-Einheiten erreicht werden. Des Weiteren kann vorteilhaft eine hohe Positioniergenauigkeit auch nach (versehentlichen) Verschiebungen erreicht werden. Vorteilhaft kann eine zuverlässige Zuordnung zu geographischen Koordinaten über einen langen Zeitraum erreicht werden. Vorteilhaft kann ein besonders einfaches und nutzerfreundliches Einmessen, insbesondere mittels des integrierten GNSS-Moduls, und/oder ein besonders einfaches und/oder nutzerfreundliches (Fern-)Auslesen von Daten wie den aktuellen Positionsdaten, erreicht werden. Außerdem kann vorteilhaft eine gute Sichtbarkeit vom Boden aus erreicht werden.

Außerdem wird vorgeschlagen, dass das GNSS-Modul in die Leuchteinheit integriert ist. Dadurch kann vorteilhaft ein optimaler Satelliten-Empfang erreicht werden, insbesondere im Vergleich zu einer Anordnung eines GNSS-Moduls in einem in Bodennähe angeordneten Passpunkt. Zudem kann vorteilhaft ein Schutz gegen Verschmutzung und/oder Beschädigung verbessert werden. Außerdem kann vorteilhaft auf einem bestehenden System einer smarten Baustellenblinkleuchte aufgebaut werden. Insbesondere ist die Leuchteinheit, vorzugsweise inklusive Leuchtmittel, in demselben Außengehäuse angeordnet wie das GNSS-Modul. Durch die Kombination aus smarter Baustellenblinkleuchte / Bakenwarnleuchte und Passpunkt-Einheit kann vorteilhaft eine einfache Bedienung erreicht werden, insbesondere da Anwender die normierten Baustellenblinkleuchten / Bakenwarnleuchten und deren grundsätzliche Bedienung bereits gut kennen. Beispielsweise sind Anwender bereits damit vertraut wie Batterien von normierten Baustellenblinkleuchten / Bakenwarnleuchten gewechselt werden. Wenn also die Passpunkt-Einheit ebenfalls ihren Strom aus derselben Batterie bezieht, kann das für den Anwender die Bedienung enorm erleichtern.

Zudem wird vorgeschlagen, dass zumindest ein Teil der Passpunkt-Einheit einen Teil eines Standfußes der smarten Baustellenblinkleuchte oder der smarten Bakenwarnleuchte ausbildet oder fest mit dem Standfuß verbunden ist, wobei an dem Standfuß ein Mast der smarten Baustellenblinkleuchte oder der smarten Bakenwarnleuchte befestigt ist, an welchem wiederum die Leuchteinheit befestigt ist. Dadurch kann vorteilhaft eine stabile Positionierung der optischen Markierung erreicht werden, während gleichzeitig ein optimales Satelliten-Signal gewährleistet ist. Zudem kann vorteilhaft eine bestehende Norm / Zulassung für Baustellenblinkleuchten eingehalten werden und trotzdem eine Passpunkt-Einheit integriert werden, wodurch insbesondere Kosten eingespart werden können. Zudem kann vorteilhaft eine gute Sichtbarkeit der optischen Markierung aus der Luft erreicht werden, welche möglichst wenig von der Leuchteinheit beeinträchtigt ist. Der Standfuß und die Leuchteinheit sind vorzugsweise an unterschiedlichen Enden des Masts befestigt. Der Mast könnte etwa 1,5 m lang sein. Der Mast könnte rund oder eckig sein, z.B. ein 40 mm x 40 mm-Kantrohr. Alternativ könnte der Mast auch eine Bake (Leitbake / Warnbake / Absperrbake) sein oder mit einer Bake verbunden sein. Der Mast könnte mit einer reflektierenden Farbe bedeckt oder bemalt sein. Dadurch kann vorteilhaft eine Sichtbarkeit und/oder ein Auffinden der Passpunkt-Einheiten für Personen am Boden verbessert werden.

Wenn die Passpunkt-Einheit eine mit dem Standfuß verbundene, und vorzugsweise um den Mast zentrierte, kontrastreich gemusterte, insbesondere schwarz-weiß gemusterte, rot-gelb gemusterte, blau-gelb gemusterte oder in anderen Farben gemusterte, ebene Platte umfasst, kann vorteilhaft eine gute Identifizierung aus der Luft erreicht werden. Vorteilhaft können Fehlidentifizierungen von anderen Objekten als Passpunkte vermieden werden. Die Platte ist vorzugsweise in Aufstellrichtung des Standfußes und/oder des Masts oberhalb, bevorzugt direkt oberhalb, des Standfußes angeordnet. Eine Unterseite der Platte berührt dabei den Standfuß. Alternativ ist jedoch auch eine vertikale Beabstandung der Platte von dem Standfuß denkbar. Die Platte könnte, z.B. zur Optimierung der Sichtbarkeit, vorteilhaft individuell flexibel auf unterschiedlichen Höhen des Masts angeordnet werden. Die Platte bedeckt vorzugsweise eine Oberseite des Standfußes vollständig. Aus der Vertikalsicht ist der Standfuß daher nicht mehr zu erkennen, nur die Platte ist sichtbar. Alternativ ist jedoch auch denkbar, dass die Platte in zumindest einer Ebenenrichtung eine kleinere horizontale Abmessung aufweist als der Standfuß. Vorzugsweise ist die Platte mit der optischen Markierung versehen, welche insbesondere die kontrastreiche Musterung ausbildet. Die kontrastreiche Musterung könnte die Form eines Propellers mit vier jeweils abwechselnd gefärbten Viertelkreis-Abschnitten aufweisen. Alternative kontrastreiche Musterformen sind jedoch ebenfalls denkbar. Die optische Markierung und das GNSS-Modul sind vorzugsweise an entgegengesetzten Enden des Masts angeordnet. Dabei kann ein vertikaler Abstand zwischen der optischen Markierung und dem GNSS-Modul mehr als einen Meter, bevorzugt etwa 1,5 m betragen. Durch die Anordnung der optischen Markierung, insbesondere der Platte, am Standfuß kann eine hohe Ortsfestigkeit / eine hohe Robustheit erreicht werden. Schwankungen, welche z.B. die Leuchteinheit durch Windstöße oder dergleichen erfahren kann, sind am Standfuß deutlich geringer ausgeprägt oder kommen gar nicht vor. Die Platte könnte beispielsweise eine Metallplatte, eine Kunststoffplatte, eine Holzplatte oder eine aus mehreren Komponenten / Materialien zusammengefügte Platte sein. Insbesondere umfasst die Platte im Zentrum eine Ausnehmung / ein Loch, durch welche/s der Mast bei der Montage hindurchgesteckt werden kann.

Alternativ dazu wird vorgeschlagen, dass die Passpunkt-Einheit eine zumindest über den Standfuß gestülpte, den Standfuß zumindest teilweise umhüllende, und vorzugsweise um den Mast zentrierte, kontrastreich gemusterte, insbesondere schwarz-weiß gemusterte, rot-gelb gemusterte, blau-gelb gemusterte oder in anderen Farben gemusterte, Überzughülle, insbesondere Textil-Überzughülle oder Folien-Überzughülle, umfasst. Dadurch kann vorteilhaft eine einfache Montage (z.B. im Nachhinein an bereits montierte Mast-Standfuß-Leuchteinheit-Kombinationen) erreicht werden. Zudem kann vorteilhaft eine Kostengünstigkeit erreicht werden. Außerdem kann vorteilhafte eine hohe Flexibilität, insbesondere für Montagen an verschieden geformte Standfüße erreicht werden. Insbesondere ist die Überzughülle aus besonders reißfesten Fasern (z.B. Aramid, Dyneema, Nylon, etc.) oder aus einer besonders reißfesten Folie (HDPE, PP, Nylonfolien, aramidverstärkte Folien) gebildet. Die Überzughülle bildet insbesondere einen Standfuß-Bezug aus.

Als weitere Alternative wird vorgeschlagen, dass die Passpunkt-Einheit eine auf den Standfuß aufgebrachte, den Standfuß zumindest teilweise bedeckende kontrastreich gemusterte, insbesondere schwarz-weiß gemusterte, rot-gelb gemusterte, blau-gelb gemusterte oder in anderen Farben gemusterte, Bemalung umfasst. Dadurch kann vorteilhaft eine hohe Flexibilität erreicht werden. Zudem kann vorteilhaft eine besonders leichte und kostengünstig erzeugbare Ausgestaltung erreicht werden. Auch Kombinationen aus Bemalung, Überzug und Platte sind denkbar.

Des Weiteren wird ein Verfahren zu einer Georeferenzierung von Luftbildern, insbesondere zu einer Kalibrierung und/oder zu einem Einmessen von Drohnen-Photogrammetriedaten, eines Areals, wie beispielsweise u.a. einer Baustelle, einer archäologischen Fund- und/oder Ausgrabungsstätte oder einer Infrastrukturanlage, insbesondere mittels der smarten Baustellenblinkleuchte oder Bakenwarnleuchte, vorzugsweise mittels des Bodenstationssystems, vorgeschlagen, wobei in dem Areal eine Mehrzahl an Passpunkt-Einheiten, die auf wenigstens einer Oberfläche eine eindeutig aus der Luft identifizierbare optische Markierung aufweisen, sichtbar angeordnet werden, wobei eine Drohne Luftbilder von dem Areal mit den Passpunkt-Einheiten aufnimmt, wobei für die Georeferenzierung, insbesondere für die Photogrammetrie, den in den Luftbildern erkennbaren Passpunkt-Einheiten exakte geographische Koordinaten zugewiesen werden, wobei momentane geographische Positionen der Passpunkt-Einheiten von jeweils zugeordneten GNSS-Modulen erfasst werden und von jeweils zugeordneten WWAN-Modulen drahtlos, insbesondere an ein externes Backend, vorzugsweise im Anschluss an jede Erfassung automatisch, übermittelt werden, und wobei zumindest eine der Passpunkt-Einheiten in ein zumindest temporär dem Areal zugeordnetes und eine von der Georeferenzierung verschiedene Hauptfunktion innerhalb des Areals ausführendes Funktionsobjekt integriert ist. Dadurch kann vorteilhaft eine hohe Nutzerfreundlichkeit erreicht werden, insbesondere indem eine initiale Positionierung erleichtert und/oder eine spätere Auffindbarkeit der Passpunkt-Einheiten verbessert werden kann. Vorteilhaft kann eine hohe Stabilität der Positionierung und/oder eine hohe Positionstreue ausgebrachter Passpunkt-Einheiten erreicht werden.

Das erfindungsgemäße Bodenstationssystem, die erfindungsgemäße smarte Baustellenblinkleuchte / Bakenwarnleuchte und das erfindungsgemäße Verfahren sollen hierbei nicht auf die oben beschriebene Anwendung und Ausführungsform beschränkt sein. Insbesondere kann das erfindungsgemäße Bodenstationssystem, die erfindungsgemäße smarte Baustellenblinkleuchte / Bakenwarnleuchte und das erfindungsgemäße Verfahren zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein beispielhaft als Baustelle ausgebildetes Areal mit einem Bodenstationssystem für eine Georeferenzierung,
- Fig. 2: eine perspektivische Darstellung einer beispielhaften smarten Baustellenblinkleuchte, welche einen Teil des Bodenstationssystems für die Georeferenzierung ausbildet,
- Fig. 3: ein schematisches Ablaufdiagramm eines Verfahrens zu einer Georeferenzierung von Luftbildern des Areals mittels des die smarte Baustellenblinkleuchte umfassenden Bodenstationssystems,
- Fig. 4: einen Schnitt durch einen Teil einer alternativen smarten Baustellenblinkleuchte für das Bodenstationssystem und
- Fig. 5: eine perspektivische Darstellung eines Teils einer weiteren alternativen smarten Baustellenblinkleuchte für das Bodenstationssystem.

### Beschreibung der Ausführungsbeispiele

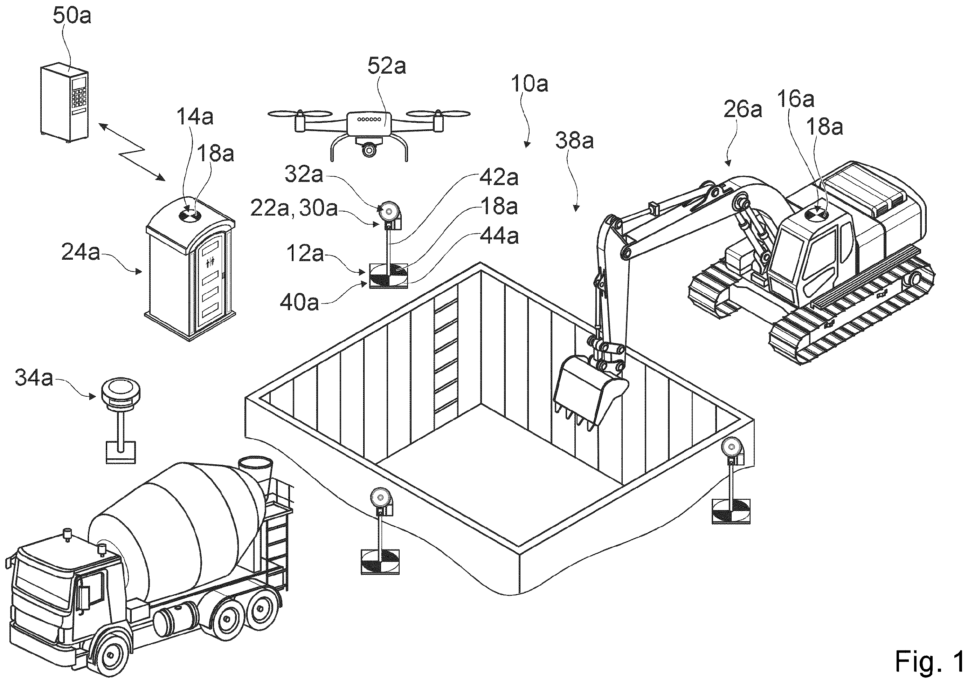

Die Figur 1 zeigt schematisch ein beispielhaft als Baustelle ausgebildetes Areal 10a. Das Areal 10a soll mittels Drohnen 52a in einem Drohnen-Photogrammetrie-Verfahren vermessen werden. Dazu müssen von der Drohne 52a aufgenommene Luftbilder des Areals 10a georeferenziert werden. In dem Areal 10a ist dazu ein Bodenstationssystem 38a zur Georeferenzierung von Luftbildern angeordnet. Das Bodenstationssystem 38a ist für eine Kalibrierung und/oder für eine Einmessung der von der Drohne 52a aufgenommenen Drohnen-Photogrammetriedaten des Areals 10a vorgesehen. Das Bodenstationssystem 38a ist ebenfalls für eine Verwendung in anderen Areale wie archäologischen Fund- und/oder Ausgrabungsstätten oder Infrastrukturanlagen geeignet.

Das Bodenstationssystem 38a umfasst eine Mehrzahl an Passpunkt-Einheiten 12a, 14a, 16a. Die Passpunkt-Einheiten 12a, 14a, 16a sind über das Areal 10a verteilt angeordnet. Jede der Passpunkt-Einheiten 12a, 14a, 16a weist auf einer dem Himmel zugewandten Oberfläche eine optische Markierung 18a auf. Die optische Markierung 18a ist derart ausgebildet, dass sie eindeutig aus der Luft bzw. aus den Luftbildern der Drohne 52a identifizierbar ist. Jede der Passpunkt-Einheiten 12a, 14a, 16a ist jeweils in ein Funktionsobjekt 22a, 24a, 26a integriert, welches dem Areal 10a (temporär) zugeordnet ist. Hierbei besitzen die Funktionsobjekte 22a, 24a, 26a jeweils eine von der Georeferenzierung und von einer Vermessung verschiedene Hauptfunktion innerhalb des Areals 10a. Einige der Funktionsobjekte 22a, 24a, 26a sich mechanische und/oder elektronische Funktionsobjekte.

Ein Funktionsobjekt 26a der Funktionsobjekte 22a, 24a, 26a, in das eine der Passpunkt-Einheiten 16a integriert ist, ist als ein dem Areal 10a zugeordnetes Fahrzeug ausgebildet. Das Fahrzeug ist beispielhaft ein Baufahrzeug, insbesondere ein Bagger. Andere oder weitere Fahrzeuge / Baufahrzeuge mit integrierter Passpunkt-Einheit 16a sind selbstverständlich ebenfalls denkbar. Ein weiteres der Funktionsobjekte 24a der Funktionsobjekte 22a, 24a, 26a, in das eine der Passpunkt-Einheiten 14a integriert ist, ist als ein in dem Areal 10a (temporär) stationär installiertes Funktionsobjekt 24a ausgebildet. Das stationär installierte Funktionsobjekt 24a ist eine Baustellen-Toilette. Andere oder weitere Fahrzeuge / stationär installierte Funktionsobjekte mit integrierter Passpunkt-Einheit 14a sind selbstverständlich ebenfalls denkbar. Ein zweites weiteres der Funktionsobjekte 22a der Funktionsobjekte 22a, 24a, 26a, in das eine der Passpunkt-Einheiten 12a integriert ist, ist als ein weiteres in dem Areal 10a (temporär) stationär installiertes Funktionsobjekt 22a ausgebildet. Das weitere stationär installierte Funktionsobjekt 22a mit der integrierten Passpunkt-Einheit 12a ist eine smarte Baustellenblinkleuchte 30a. Alternativ könnte das weitere stationär installierte Funktionsobjekt 22a auch eine smarte Bakenwarnleuchte sein. Die smarte Baustellenblinkleuchte 30a ist dazu eingerichtet, mittels eines Leuchtsignals, z.B. durch ein Blinken, einen aktiven Georeferenzierungs-Vorgang anzuzeigen. Wenn die Drohne 52a fliegt und Aufnahmen für die Georeferenzierung macht, zeigt die smarte Baustellenblinkleuchte 30a dies durch das Lichtsignal an. Das Bodenstationssystem 38a weist zudem eine in dem Areal 10a angeordnete RTK-GNSS (Real-Time Kinematic Global Navigation Satellite System)-Basisstation 34a auf.

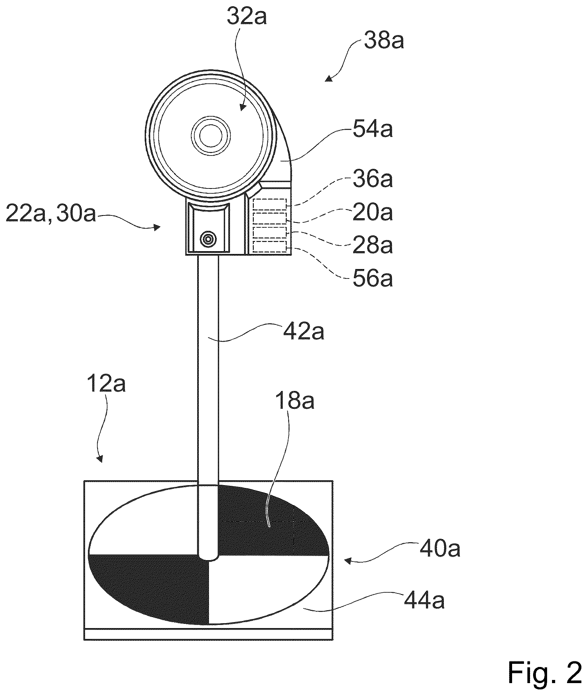

Die Figur 2 zeigt schematisch eine perspektivische Darstellung einer beispielhaften smarten Baustellenblinkleuchte 30a, welche einen Teil des Bodenstationssystems 38a für die Georeferenzierung ausbilden kann. Die smarte Baustellenblinkleuchte 30a umfasst eine Leuchteinheit 32a. Die Leuchteinheit 32a ist zu einer Ausgabe der Lichtsignale, insbesondere der Blinklichtsignale, vorgesehen. Die Leuchtfunktion der Leuchteinheit 32a entspricht der von handelsüblichen Baustellenblinkleuchten 30a und wird daher an dieser Stelle nicht weiter im Detail beschrieben. Die smarte Baustellenblinkleuchte 30a weist ein integriertes Globales-Navigationssatellitensystem (GNSS)-Modul 20a auf. Das GNSS-Modul 20a zu einer Erfassung einer momentanen geographischen Position der smarten Baustellenblinkleuchte 30a vorgesehen. Das GNSS-Modul 20a ist ein RTK-GNSS-Modul. Das GNSS-Modul 20a ist in die Leuchteinheit 32a integriert. Die smarten Baustellenblinkleuchte 30a weist ein Außengehäuse 54a auf. Das GNSS-Modul 20a und die Leuchteinheit 32a sind innerhalb desselben Außengehäuses 54a angeordnet. Die smarte Baustellenblinkleuchte 30a weist ein integriertes Weitverkehrsfunknetz (WWAN)-Modul 28a auf. Das WWAN-Modul 28a ist in die Leuchteinheit 32a integriert. Das WWAN-Modul 28a und die Leuchteinheit 32a sind innerhalb desselben Außengehäuses 54a angeordnet. Das WWAN-Modul 28a ist zu einem drahtlosen Übermitteln der erfassten momentanen geographischen Position der smarten Baustellenblinkleuchte 30a vorgesehen. Zudem kann die smarte Baustellenblinkleuchte 30a ein weiteres Funkmodul für eine lokale Datenkommunikation aufweisen (nicht dargestellt).

Die smarte Baustellenblinkleuchte 30a weist die Passpunkt-Einheit 12a für die Georeferenzierung der Luftbilder, insbesondere für eine Kalibrierung und/oder Einmessung von Drohnen-Photogrammetriedaten, auf. Die Passpunkt-Einheit 12a ist mit der smarten Baustellenblinkleuchte 30a integriert ausgebildet. Die RTK-GNSS-Basisstation 34a ist dazu eingerichtet, Korrekturdaten für die Positionsbestimmung der GNSS-Module 20a der jeweiligen Passpunkt-Einheiten 12a, 14a, 16a zu bestimmen und an die GNSS-Module 20a der jeweiligen Passpunkt-Einheiten 12a, 14a, 16a zu übermitteln. Die eine Passpunkt-Einheit 12a weist ein Beschleunigungssensor-Modul 36a auf. Das Beschleunigungssensor-Modul 36a ist zu einer Erkennung von Bewegungen der zugehörigen Passpunkt-Einheit 12a vorgesehen. Das GNSS-Modul 20a ist dazu eingerichtet, in Folge einer von dem Beschleunigungssensor-Modul 36a detektierten Bewegung der jeweiligen Passpunkt-Einheit 12a eine automatische Neu-Einmessung der geographischen Position der zugehörigen Passpunkt-Einheit 12a vorzunehmen. Im Anschluss an eine Neu-Einmessung gibt das WWAN-Modul 28a der jeweiligen Passpunkt-Einheit 12a das Messergebnis drahtlos aus.

Die smarte Baustellenblinkleuchte 30a weist einen Standfuß 40a auf. Der Standfuß 40a kann ein handelsüblicher Baustellenblinkleuchten-Standfuß (TL-Fußplatte) sein, welcher dem Fachmann bekannt ist und daher an dieser Stelle nicht weiter im Detail beschrieben wird. Die smarte Baustellenblinkleuchte 30a weist einen Mast 42a auf. Der Mast 42a ist an dem Standfuß 40a befestigt. An einem gegenüberliegenden Ende des Masts 42a ist zudem die Leuchteinheit 32a befestigt. Die Passpunkt-Einheit 12a weist eine Oberfläche mit einer eindeutig aus der Luft identifizierbaren optischen Markierung 18a auf. Die optische Markierung 18a ist besteht aus einem kontrastreichen Muster. Die optische Markierung 18a kann ein Schwarz-Weiß-Muster oder ein anderes zwei- oder mehrfarbiges Muster sein. Die Passpunkt-Einheit 12a ist fest mit dem Standfuß 40a verbunden. Die Passpunkt-Einheit 12a umfasst eine ebene Platte 44a. Die ebene Platte 44a ist kontrastreich gemustert. Die ebene Platte 44a weist die optische Markierung 18a auf. Die ebene Platte 44a ist um den Mast 42a zentriert. Die ebene Platte 44a ist mit dem Standfuß 40a verbunden. Die ebene Platte 44a liegt auf einer Oberseite des Standfußes 40a auf dem Standfuß 40a auf. Die smarte Baustellenblinkleuchte 30a weist eine Batterieaufnahme 56a auf. Die Batterieaufnahme 56a ist zu einem Einsetzen einer Wechselbatterie (nicht dargestellt) und/oder zu einem Verbinden mit einer Wechselbatterie vorgesehen. Alternativ könnte die smarte Baustellenblinkleuchte 30a eine integrierte wiederaufladbare Batterie umfassen.

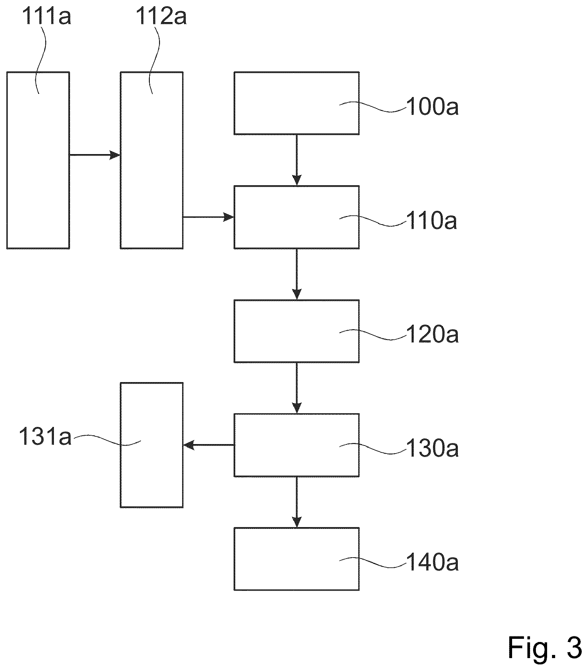

Die Figur 3 zeigt ein schematisches Ablaufdiagramm eines Verfahrens zu einer Georeferenzierung von Luftbildern des Areals 10a. Das ist zu einer Kalibrierung und/oder zu einem Einmessen von Drohnen-Photogrammetriedaten des Areals 10a vorgesehen. Alternativ könnten die durch die Passpunkt-Einheiten 12a, 14a, 16a bereitgestellten Passpunkte auch zu einer Selbst-Lokalisierung von Drohnen 52a, z.B. von Lieferdrohnen, die das Areal 10a überfliegen, genutzt werden. Außerdem könnten die durch die Passpunkt-Einheiten 12a, 14a, 16a bereitgestellten Passpunkte auch von anderen atmosphärenbasieren Systemen, die keine Kamera-Drohnen 52a sind, genutzt werden. Das Areal 10a könnte anstatt einer Baustelle auch eine archäologische Fund- und/oder Ausgrabungsstätte, einer Infrastrukturanlage, oder ein anderweitig genutztes Areal 10a sein. Das Verfahren wird mittels des Bodenstationssystems 38a, insbesondere mittels der Passpunkt-Einheiten 12a, 14a, 16a des Bodenstationssystems 38a, durchgeführt. Das Verfahren wird mittels der smarten Baustellenblinkleuchte 30a durchgeführt. In zumindest einem Verfahrensschritt 100a werden in dem Areal 10a eine Mehrzahl an Passpunkt-Einheiten 12a, 14a, 16a mit der aus der Luft identifizierbaren optischen Markierung 18a sichtbar angeordnet. Dabei werden die optischen Markierungen 18a so ausgerichtet, dass die für überfliegende Drohnen 52a aus der Luft sichtbar sind, insbesondere zumindest dann, wenn diese sich zumindest im Wesentlichen senkrecht über den jeweiligen Passpunkt-Einheiten 12a, 14a, 16a befinden. Im Vorfeld des Verfahrensschritts 100a wurden die Passpunkt-Einheiten 12a, 14a, 16a in die jeweiligen Funktionsobjekte 22a, 24a, 26a, die zumindest temporär dem Areal 10a zugeordnet sind und eine von der Georeferenzierung verschiedene Hauptfunktion innerhalb des Areals 10a ausführen, wie u.a. die smarte Baustellenblinkleuchte 30a, integriert. In zumindest einem weiteren Verfahrensschritt 110a werden die momentanen geographischen Positionen der ausgeteilten Passpunkt-Einheiten 12a, 14a, 16a von den jeweils zugeordneten GNSS-Modulen 20a der Passpunkt-Einheiten 12a, 14a, 16a initial erfasset. Die initiale Erfassung kann beispielsweise bei der Aktivierung des Funktionsobjekts 22a, 24a, 26a, der die jeweilige Passpunkt-Einheit 12a, 14a, 16a zugeordnet ist, erfolgen, also z.B. bei einem Anschalten der smarten Baustellenblinkleuchte 30a.

Die Erfassung der momentanen geographischen Positionen der ausgeteilten Passpunkt-Einheiten 12a, 14a, 16a wird bei einem Eintreten bestimmter Ereignisse wiederholt und/oder aktualisiert. In zumindest einem Verfahrensschritt 111a wird von dem Beschleunigungssensor-Modul 36a einer der Passpunkt-Einheiten 12a, 14a, 16a ein Bewegen der zugehörigen Passpunkt-Einheit 12a, 14a, 16a, insbesondere eine Repositionierung der zugehörigen Passpunkt-Einheit 12a, 14a, 16a, erfasst. In zumindest einem Verfahrensschritt 112a wird, ausgelöst durch die Erfassung der Bewegung der Passpunkt-Einheit 12a, 14a, 16a die momentane geographische Position der entsprechenden Passpunkt-Einheit 12a, 14a, 16a von dem zugeordneten GNSS-Modul 20a dieser Passpunkt-Einheit 12a, 14a, 16a erneut erfasst. Insbesondere bei einer Änderung der ermittelten geographischen Koordination wird die momentane geographische Position aktualisiert. In zumindest einem Verfahrensschritt 120a werden die jeweils initial oder erneut erfassten momentanen geographischen Positionen der Passpunkt-Einheiten 12a, 14a, 16a im Anschluss an deren Erfassung von den jeweils zugeordneten WWAN-Modulen 28a der Passpunkt-Einheiten 12a, 14a, 16a über eine Drahtlos-Funkverbindung versandt / ausgesandt. Die ausgesandten Daten werden unter anderem von einem innerhalb oder außerhalb des Areals 10a angeordneten externen Backend 50a (vgl. Fig. 1) empfangen. Das externe Backend 50a ist vorzugsweise ein stationärer Rechner oder ein stationäres Rechnersystem, könnte jedoch auch mobil ausgebildet sein, z.B. in der Drohne 52a selbst angeordnet sein.

In zumindest einem Verfahrensschritt 130a überfliegt die Drohne 52a das Areal 10a. Dabei nimmt die Drohne 52a Luftbilder von dem Areal 10a auf. In den Luftbildern sind Abbildungen der in dem Areal 10a verteilten Passpunkt-Einheiten 12a, 14a, 16a enthalten. In zumindest einem optionalen Verfahrensschritt 131a zeigt die smarte Baustellenblinkleuchte 30a durch ein Blinken an, dass die Luftbildaufnahme durch die Drohne 52a aktuell in Gange ist. In zumindest einem Verfahrensschritt 140a werden die Luftbilder der Drohne 52a mit den zum Zeitpunkt der Aufnahme der Luftbilder gültigen gemessenen geographischen Koordinaten der in den Luftaufnahmen abgebildeten Passpunkt-Einheiten 12a, 14a, 16a zusammengebracht. Beispielsweise ruft die Drohne 52a selbst die Daten von dem externen Backend 50a ab, empfängt die Daten direkt von den Passpunkt-Einheiten 12a, 14a, 16a oder das Zusammenbringen der Luftaufnahmen mit den geographischen Koordinaten findet in einem externen Analysevorgang auf einem von der Drohne 52a verschiedenen Rechner, z.B. dem externen Backend 50a oder einem von dem externen Backend 50a verschiedenen Rechner, statt. In dem Verfahrensschritt 140a werden für die Georeferenzierung, insbesondere für die Photogrammetrie, den in den Luftbildern erkennbaren Passpunkt-Einheiten 12a, 14a, 16a die von den Passpunkt-Einheiten 12a, 14a, 16a gemessenen und ausgesandten exakten geographischen Koordinaten zugewiesen. Dadurch kann aus den Luftaufnahmen ein geographisch exakt zugeordnetes Modell des Areals 10a erstellt werden.

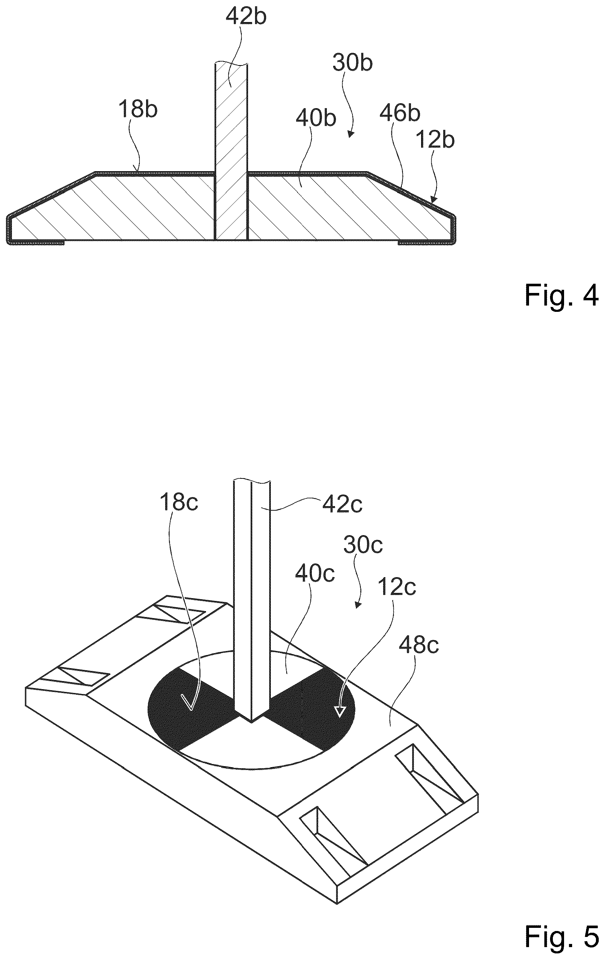

In den Figuren 4 und 5 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 und 5 ist der Buchstabe a durch die Buchstaben b und c ersetzt.

Die Figur 4 zeigt schematisch einen Schnitt durch einen, einen Standfuß 40b und einen Mast 42b umfassenden Teil einer alternativen smarten Baustellenblinkleuchte 30b. Die alternative smarte Baustellenblinkleuchte 30b weist eine integrierte Passpunkt-Einheit 12b mit einer eindeutig aus der Luft identifizierbaren optischen Markierung 18b auf. Die Passpunkt-Einheit 12b ist fest mit dem Standfuß 40b verbunden. Die Passpunkt-Einheit 12b umfasst eine über den Standfuß 40b gestülpte, den Standfuß 40b teilweise umhüllende Überzughülle 46b. Die Überzughülle 46b ist beispielhaft eine Textil-Überzughülle, könnte aber auch eine Folien-Überzughülle sein. Die Überzughülle 46b ist um den Mast 42b herum zentriert. Die Überzughülle 46b ist zur Ausbildung der optischen Markierung 18b kontrastreich gemustert.

Die Figur 5 zeigt schematisch eine perspektivische Darstellung eines, einen Standfuß 40c und einen Mast 42c umfassenden Teils einer weiteren alternativen smarten Baustellenblinkleuchte 30c. Die weitere alternative smarte Baustellenblinkleuchte 30c weist eine integrierte Passpunkt-Einheit 12c mit einer eindeutig aus der Luft identifizierbaren optischen Markierung 18c auf. Der die optische Markierung 18c aufweisende Teil der Passpunkt-Einheit 12c ist fest mit dem Standfuß 40c verbunden. Der die optische Markierung 18c aufweisende Teil der Passpunkt-Einheit 12c ist durch eine auf den Standfuß 40c aufgebrachte und den Standfuß 40c zumindest teilweise bedeckende Bemalung 48c gebildet. Die Bemalung 48c ist zur Ausbildung der optischen Markierung 18c kontrastreich gemustert.

### Bezugszeichen

- 10: Areal
- 12: Passpunkt-Einheit
- 14: Passpunkt-Einheit
- 16: Passpunkt-Einheit
- 18: Optische Markierung
- 20: GNSS-Modul
- 22: Funktionsobjekt
- 24: Funktionsobjekt
- 26: Funktionsobjekt
- 28: WWAN-Modul
- 30: Baustellenblinkleuchte
- 32: Leuchteinheit
- 34: RTK-GNSS-Basisstation
- 36: Beschleunigungssensor-Modul
- 38: Bodenstationssystem
- 40: Standfuß
- 42: Mast
- 44: Platte
- 46: Überzughülle
- 48: Bemalung
- 50: Backend
- 52: Drohne
- 54: Außengehäuse
- 56: Batterieaufnahme
- 100: Verfahrensschritt
- 110: Verfahrensschritt
- 111: Verfahrensschritt
- 112: Verfahrensschritt
- 120: Verfahrensschritt

- 130: Verfahrensschritt
- 131: Verfahrensschritt
- 140: Verfahrensschritt

## Patentansprüche

1. Bodenstationssystem (38a-c) zu einer Georeferenzierung von Luftbildern, insbesondere für eine Kalibrierung und/oder Einmessung von Drohnen-Photogrammetriedaten, eines Areals (10a-c), wie beispielsweise u.a. einer Baustelle, einer archäologischen Fund- und/oder Ausgrabungsstätte oder einer Infrastrukturanlage,
mit einer Mehrzahl an über das Areal (10a-c) verteilt anordenbaren Passpunkt-Einheiten (12a-c, 14a-c, 16a-c), wobei jede der Passpunkt-Einheiten (12a-c, 14a-c, 16a-c) auf wenigstens einer Oberfläche eine eindeutig aus der Luft identifizierbare optische Markierung (18a-c) aufweist,
**dadurch gekennzeichnet, dass** jeder der Passpunkt-Einheiten (12a-c, 14a-c, 16a-c) ein Globales-Navigationssatellitensystem (GNSS)-Modul (20a-c) zu einer Erfassung seiner momentanen geographischen Position und ein Weitverkehrsfunknetz (WWAN)-Modul (28a-c) zumindest zu einem drahtlosen Übermitteln der erfassten momentanen geographischen Position zugeordnet ist,
wobei zumindest eine der Passpunkt-Einheiten (12a-c, 14a-c, 16a-c) in ein zumindest temporär dem Areal (10a-c) zugeordnetes und eine von der Georeferenzierung verschiedene Hauptfunktion innerhalb des Areals (10a-c) ausführendes, vorzugsweise mechanisches und/oder elektronisches, Funktionsobjekt (22a-c, 24a-c, 26a-c) integriert ist.

2. Bodenstationssystem (38a-c) nach Anspruch 1, **dadurch gekennzeichnet, dass** zumindest eines der Funktionsobjekte (22a-c, 24a-c, 26a-c), in das eine der Passpunkt-Einheiten (16a-c) integriert ist, ein dem Areal (10a-c) zugeordnetes Fahrzeug, beispielsweise u.a. ein Baufahrzeug, ein Einsatzfahrzeug oder ein Personentransportfahrzeug, ist.

3. Bodenstationssystem (38a-c) nach Anspruch 1 oder 2, **dadurch gekennzeichnet, dass** zumindest eines der Funktionsobjekte (22a-c, 24a-c, 26a-c), in das eine der Passpunkt-Einheiten (12a-c, 14a-c) integriert ist, ein in dem Areal (10a-c) zumindest temporär stationär installiertes Funktionsobjekt (22a-c, 24a-c), beispielsweise u.a. eine Warnleuchte, ein Wohn- und/oder Aufenthaltscontainer, ein Toilettenhäuschen, eine Absperrung, ein Stromgenerator oder ein Kran, ist.

4. Bodenstationssystem (38a-c) nach Anspruch 3, **dadurch gekennzeichnet, dass** das temporär stationär installierte Funktionsobjekt (22a-c) mit der integrierten Passpunkt-Einheit (12a-c) eine smarte Baustellenblinkleuchte (30a-c) oder eine smarte Bakenwarnleuchte ist, wobei das der Passpunkt-Einheit (12a-c) zugeordnete GNSS-Modul (20a-c) und/oder das der Passpunkt-Einheit (12a-c) zugeordnete WWAN-Modul (28a-c) ein integraler Bestandteil einer Leuchteinheit (32a-c) der smarten Baustellenblinkleuchte (30a-c) oder der smarten Bakenwarnleuchte ist.

5. Bodenstationssystem (38a-c) nach Anspruch 3 oder 4, **dadurch gekennzeichnet, dass** das temporär stationär installierte Funktionsobjekt (22a-c) mit der integrierten Passpunkt-Einheit (12a-c) eine smarte Baustellenblinkleuchte (30a-c) oder eine smarte Bakenwarnleuchte ist, welche dazu eingerichtet ist, mittels eines Leuchtsignals, z.B. durch ein Blinken, einen aktiven Georeferenzierungs-Vorgang anzuzeigen.

6. Bodenstationssystem (38a-c) nach einem der vorhergehenden Ansprüche, **gekennzeichnet durch** eine dem Areal (10a-c) zugeordnete, und insbesondere in dem Areal (10a-c) angeordnete, RTK-GNSS (Real-Time Kinematic Global Navigation Satellite System)-Basisstation (34a-c), welche dazu eingerichtet ist, Korrekturdaten für die Positionsbestimmung der GNSS-Module (20a-c) der Passpunkt-Einheiten (12a-c, 14a-c, 16a-c) zu bestimmen und an die GNSS-Module (20a-c) zu übermitteln.

7. Bodenstationssystem (38a-c) nach einem der vorhergehenden Ansprüche, **dadurch gekennzeichnet, dass** wenigstens die zumindest eine Passpunkt-Einheit (12a-c, 14a-c, 16a-c), vorzugsweise jede der Passpunkt-Einheiten (12a-c, 14a-c, 16a-c), ein Beschleunigungssensor-Modul (36a-c) zu einer Erkennung von Bewegungen der jeweiligen Passpunkt-Einheit (12a-c, 14a-c, 16a-c) umfasst.

8. Bodenstationssystem (38a-c) nach Anspruch 7, **dadurch gekennzeichnet, dass** das GNSS-Modul (20a-c) dazu eingerichtet ist, in Folge einer von dem Beschleunigungssensor-Modul (36a-c) detektierten Bewegung der jeweiligen Passpunkt-Einheit (12a-c, 14a-c, 16a-c) eine automatische Neu-Einmessung der geographischen Position der zugehörigen Passpunkt-Einheit (12a-c, 14a-c, 16a-c) vorzunehmen, welche dann vorzugsweise von dem WWAN-Modul (28a-c) drahtlos ausgegeben wird.

9. Smarte Baustellenblinkleuchte (30a-c) oder smarte Bakenwarnleuchte, insbesondere für ein Bodenstationssystem (38a-c) zumindest nach dem Anspruch 4, mit einer Leuchteinheit (32a-c) zu einer Ausgabe von Lichtsignalen, insbesondere Warnlichtsignalen, mit einem integrierten GNSS-Modul (20a-c) zu einer Erfassung einer momentanen geographischen Position und mit einem, insbesondere in die Leuchteinheit (32a-c), integrierten WWAN-Modul (28a-c) zumindest zu einem drahtlosen Übermitteln der erfassten momentanen geographischen Position, **gekennzeichnet durch** eine integrierte Passpunkt-Einheit (12a-c, 14a-c, 16a-c) für eine Georeferenzierung von Luftbildern, insbesondere für eine Kalibrierung und/oder Einmessung von Drohnen-Photogrammetriedaten, wobei die Passpunkt-Einheit (12a-c, 14a-c, 16a-c) wenigstens eine Oberfläche mit einer eindeutig aus der Luft identifizierbaren optischen Markierung (18a-c) aufweist.

10. Smarte Baustellenblinkleuchte (30a-c) oder smarte Bakenwarnleuchte nach Anspruch 9, **dadurch gekennzeichnet, dass** das GNSS-Modul (20a-c) in die Leuchteinheit (32a-c) integriert ist.

11. Smarte Baustellenblinkleuchte (30a-c) oder smarte Bakenwarnleuchte nach Anspruch 9 oder 10, umfassend einen Standfuß (40a-c) und einen an dem Standfuß (40a-c) befestigten Mast (42a-c), an welchem wiederum die Leuchteinheit (32a-c) befestigt ist, **dadurch gekennzeichnet, dass** zumindest ein Teil der Passpunkt-Einheit (12a-c, 14a-c, 16a-c) einen Teil des Standfußes (40c) ausbildet oder fest mit dem Standfuß (40a-b) verbunden ist.

12. Smarte Baustellenblinkleuchte (30a) oder smarte Bakenwarnleuchte nach Anspruch 11, **dadurch gekennzeichnet, dass** die Passpunkt-Einheit (12a, 14a, 16a) eine mit dem Standfuß (40a) verbundene, und vorzugsweise um den Mast (42a) zentrierte, kontrastreich gemusterte ebene Platte (44a) umfasst.

13. Smarte Baustellenblinkleuchte (30b) oder smarte Bakenwarnleuchte nach Anspruch 11, **dadurch gekennzeichnet, dass** die Passpunkt-Einheit (12b, 14b, 16b) eine zumindest über den Standfuß (40b) gestülpte, den Standfuß (40b) zumindest teilweise umhüllende, und vorzugsweise um den Mast (42b) zentrierte, kontrastreich gemusterte Überzughülle (46b), insbesondere Textil-Überzughülle oder Folien-Überzughülle, umfasst.

14. Smarte Baustellenblinkleuchte (30c) oder smarte Bakenwarnleuchte nach Anspruch 11, **dadurch gekennzeichnet, dass** die Passpunkt-Einheit (12c, 14c, 16c) eine auf den Standfuß (40c) aufgebrachte, den Standfuß (40c) zumindest teilweise bedeckende kontrastreich gemusterte Bemalung (48c) umfasst.

15. Verfahren zu einer Georeferenzierung von Luftbildern, insbesondere zu einer Kalibrierung und/oder zu einem Einmessen von Drohnen-Photogrammetriedaten, eines Areals (10a-c), wie beispielsweise u.a. einer Baustelle, einer archäologischen Fund- und/oder Ausgrabungsstätte oder einer Infrastrukturanlage, insbesondere mittels einer smarten Baustellenblinkleuchte (30a-c) oder Bakenwarnleuchte nach einem der Ansprüche 9 bis 14, vorzugsweise mittels eines Bodenstationssystems (38a-c) nach einem der Ansprüche 1 bis 8,
wobei in dem Areal (10a-c) eine Mehrzahl an Passpunkt-Einheiten (12a-c, 14a-c, 16a-c), die auf wenigstens einer Oberfläche eine eindeutig aus der Luft identifizierbare optische Markierung (18a-c) aufweisen, sichtbar angeordnet werden,
wobei eine Drohne (52a-c) Luftbilder von dem Areal (10a-c) mit den Passpunkt-Einheiten (12a-c, 14a-c, 16a-c) aufnimmt, und
wobei für die Georeferenzierung, insbesondere für die Photogrammetrie, den in den Luftbildern erkennbaren Passpunkt-Einheiten (12a-c, 14a-c, 16a-c) exakte geographische Koordinaten zugewiesen werden, **dadurch gekennzeichnet, dass** momentane geographische Positionen der Passpunkt-Einheiten (12a-c, 14a-c, 16a-c) von jeweils zugeordneten GNSS-Modulen (20a-c) erfasst werden und von jeweils zugeordneten WWAN-Modulen (28a-c) drahtlos, insbesondere an ein externes Backend (50a-c), vorzugsweise im Anschluss an jede Erfassung automatisch, übermittelt werden, wobei zumindest eine der Passpunkt-Einheiten (12a-c, 14a-c, 16a-c) in ein zumindest temporär dem Areal (10a-c) zugeordnetes und eine von der Georeferenzierung verschiedene Hauptfunktion innerhalb des Areals (10a-c) ausführendes Funktionsobjekt (22a-c, 24a-c, 26a-c) integriert ist.
